# EUROPEAN PATENT APPLICATION

(11) **EP 1 798 908 A1**
(43) Date of publication of application: **20.06.2007**
(21) Application number: 04791974.1
(22) Date of filing: 01.10.2004
(51) Int. Cl.: H04L 12/56

(54) **ACCESS SERVICE NETWORK SYSTEM, ACCESS DEVICE, L2TP TUNNEL LINE CONCENTRATOR AND HOME AGENT, AND ACCESS SERVICE PROVIDING METHOD**

(71) Applicant: MITSUBISHI DENKI KABUSHIKI KAISHA, Chiyoda-ku, Tokyo 100-8310 (JP)
(72) Inventor: SHIMIZU, Keiichi, c/o Mitsubishi Denki K.K., Tokyo 100-8310 (JP)
(74) Representative: Nicholls, Michael John
(86) International application number: PCT/JP2004/014507
(87) International publication number: WO 2006/038268

(57) **Abstract**

An access service network system establishes a communication connection between a terminal (11) and ISP networks (10a to 10c) by using a communication connection L2TP in an access service network that accommodates the terminal (11) and includes plural LACs (2a, 2b) that tunnel layer 2 data, LNSs (3a, 3b) that terminate the tunnel and the layer 2 data; and a home agent (4)'. When the terminal (11) accesses the LNS (3a), the LAC (2a) generates for each terminal (11) a virtual access instance (20a) which generates an L2TP tunnel between the LAC (2a) and the LNS (3a). When the terminal (11) moves to the other LAC (2b), the LAC (2a) moves a virtual access instance (20b) to the LAC (2b) at the move destination. The home agent (4) transmits a message destined to the virtual access instance, using a Mobile IP.

## Description

### TECHNICAL FIELD

The present invention relates to an access service network system including a user terminal, and a communication path from this user terminal to a network held by an Internet service provider, and an access device, an L2TP tunnel line concentrator, and a home agent that are used in this access service network system. The present invention also relates to a method of providing an access service to the user terminal in this access service network system.

### BACKGROUND ART

To provide an Internet access service to a user via the ADSL (Asymmetric Digital Subscriber Line), an ADSL terminal device within a user's house is connected to an access device held by an access service network company (a provider of the ADSL) installed within a telephone station via an analog telephone line. The access service network company provides a network (hereinafter, "access service network") that transmits and receives user data between an access device and a server device owned by the Internet service provider (hereinafter, ISP). In general, the ISP performs user authentication. Therefore, it is general that user data is transmitted and received using the PPP (Point to Point Protocol) having an authentication mechanism, and the data of the PPP is distributed using a tunnel technique of the IP (Internet Protocol) between the access device and the server device. A tunneling mechanism for this purpose is prescribed as a layer 2 tunnel protocol (hereinafter, L2TP) (see Nonpatent Literature 1, for example). This access service network is based on the assumption that a user terminal is fixed and not mobile. This access service network does not take a mobile terminal into consideration.

On the other hand, various kinds of mechanisms that guarantee communication for mobile terminals in the normal IP network are available. In general, when an IP subnet changes due to a move, a communication session is disconnected due to a change of an IP address used by a mobile terminal. Therefore, the communication session is held by a Mobile IP, thereby guaranteeing the communication while moving (see Nonpatent Literature 2, for example).

As a conventional technique having a mechanism that guarantees communication with respect to a move of a mobile terminal, there is proposed an access method for a mobile terminal having a private IP address within a corporation to access a network within the corporation by using a Mobile IP from a network outside a firewall, based on the assumption that the mobile terminal has the Mobile IP (see Patent Document 1, for example). According to this method, a home agent owned a corporation having a security function such as a firewall is assumed. This home agent is collocated in an external network such as the ISP, and the home agent secures stable communication by setting a secure Mobile IP tunnel between the home agent and the mobile terminal. At the same time, the home agent sets a secure VPN (Virtual Private Network) tunnel in the corporation. With this arrangement, the mobile terminal can use a private IP address of the corporation as a home IP address of the IP, thereby achieving secure tunnel communication.

Nonpatent Literature 1: W. Townsley, A. Valencia, A. Rubens, G. Pall, G. Zorn, B. Palter, "Request for Comments: 2661, Layer Two Tunneling Protocol "L2TP"", August 1999, pages 3-9, [online], retrieved from the Internet: <URL: http://www.ietf.org/rfc/rfc2661.txt>
Nonpatent Literature 2: C. Perkins, "Request for Comments: 2002, IP Mobility Support", October 1996, pages 8-11 [online], retrieved from the Internet: <URL: http://www.ietf.org/rfc/rfc2002.txt>
Patent Document 1: Japanese Patent Application Laid-Open No. 2004-135248

### DISCLOSURE OF INVENTION

### PROBLEM TO BE SOLVED BY THE INVENTION

According to the access method prescribed in the Nonpatent Literature 1, because the ISP executes the user authentication, the access service network company needs to transfer the connection of PPP data (hereinafter, "PPP connection") to an LNS (L2TP Network Server, L2TP network server) as a server device via a LAC (L2TP access concentrator, L2TP access concentrator) as an access device. When the access service network accommodates a mobile terminal, the PPP connection is disconnected, particularly when the mobile terminal moves by crossing over the LAC (access device). Therefore, the mobile terminal needs to set the PPP connection again by using the L2TP. Because the IP address of the mobile terminal is obtained at the setting time of the PPP connection, the IP address changes when the PPP connection is set again. Consequently, there is a problem in the application in that communications cannot be continued seamlessly. In other words, the problem that the access service network company that accommodates the mobile terminal is that mobile permeability cannot be guaranteed to the PPP connection.

The problem that the IP address at the terminal changes during a move of the terminal and communication cannot be executed can be solved when the Mobile IP described in the Nonpatent Literature 2 is used as a base. For example, according to the method described in the Patent Document 1, in the method of executing communication from the external network by applying a Mobile IP to a corporation having a private network, by safely using a private IP address, the Mobile IP is used to securely tunnel through the private IP address. However, according to this technique, mobile permeability is given to a data flow having the private IP address, and mobile permeability is not given to the PPP connection. This is because while the PPP connection is a technique of a layer 2, and operates under the IP layer, the Mobile IP technique gives mobile permeability to the IP layer. In other words, even when the Mobile IP technique is applied to the mobile terminal, the problem held by the access service network company described in the Nonpatent Literature 1 cannot be solved.

The present invention has been achieved in view of the above problems. It is an object of the present invention to obtain an access service network system that can give mobile permeability to a PPP connection which is set by an access device of an access service network company accommodating a mobile terminal. It is another object of the present invention to obtain an access device, an L2TP tunnel line concentrator, and a home agent that are used in this access service network system. It is still another object of the invention to obtain a method of providing an access service in this access service network system.

### MEANS FOR SOLVING PROBLEM

To achieve the above object, according to an aspect of the present invention, an access service network system that establishes a communication connection between a mobile terminal and a connection destination network by using an L2TP in an access service network that includes the mobile terminal, a plurality of access devices for tunneling layer 2 data from the mobile terminal in an IP packet, a server device that terminates the tunneling and the layer 2 data and that is connected to the connection destination network of the mobile terminal, and a home agent for continuing a communication of the mobile terminal that crosses between the access devices during communication, wherein the access device includes a virtual-access-instance generating unit that generates for each mobile terminal a virtual access instance which generates an L2TP tunnel between the server device and the mobile terminal, when the mobile terminal accesses the server device, and a virtual-access-instance moving unit that moves the virtual access instance to an access device at a move destination, when the mobile terminal moves by crossing over between the access devices, the virtual access instance includes a unit that executes a position registration, using a generated virtual access instance or a move-destination access device as a care-of address, in the home agent, when the virtual access instance is generated or moves to a position controlled by a different access device, and the home agent includes a unit that stores virtual-access-instance address information that relates the care-of address of the virtual access instance to a home address which is first allocated at the generation time of the virtual access instance, based on the position registration from the virtual access instance, and a unit that transmits a message destined to a home address of the virtual access instance, to the care-of address, using a Mobile IP tunnel, based on the virtual-access-instance address information.

### EFFECT OF THE INVENTION

According to the present invention, mobile permeability can be given to a PPP connection that is set by an access device of an access service network system. In other words, the access device can accommodate a mobile terminal by using not only a telephone line but also a radio communication technique of a radio LAN and CDMA, and the mobile terminal can access an ISP while moving.

### BRIEF DESCRIPTION OF DRAWINGS

[Fig. 1] Fig. 1 is a schematic diagram of one example of a configuration of an access service network system according to the present invention;
[Fig, 2] Fig. 2 is a sequence diagram of a process procedure of an operation performed when a terminal first radio-accesses the access service network system;
[Fig. 3] Fig. 3 is a sequence diagram of an operation process of the access service network system when the terminal moves to a position controlled by a different LAC;
[Fig. 4] Fig. 4 is a schematic diagram of one example of a configuration of an access service network system according to a second embodiment of the present invention;
[Fig. 5] Fig. 5 is a schematic diagram of a protocol stack of an access service network including an L2TP concentrator;
[Fig. 6] Fig. 6 is a sequence diagram of a process procedure of an operation performed when the terminal first radio-accesses the access service network;
[Fig. 7] Fig. 7 is one example of a mapping table of an L2TP tunnel;
[Fig. 8] Fig. 8 is one example of a configuration of an access service network system according to a third embodiment of the present invention;
[Fig. 9] Fig. 9 is a schematic diagram of a protocol stack of the access service network system;
[Fig. 10] Fig. 10 is one example of a configuration of an access service network system according to a fourth embodiment of the present invention;
[Fig. 11] Fig. 11 is a schematic diagram of one example of an optimized protocol stack in the access service network system;
[Fig. 12] Fig. 12 is a schematic diagram one example of the optimized protocol stack in the access service network system;
[Fig. 13] Fig. 13 is a schematic diagram of one example of a configuration of an access service network system according to a seventh embodiment of the present invention;
[Fig. 14] Fig. 14 is a sequence diagram of a process procedure of an operation performed when the terminal first radio-accesses the access service network;
[Fig. 15] Fig. 15 is a sequence diagram of an operation process when the terminal moves to a position controlled by a different LAC;
[Fig. 16] Fig. 16 is one example of L2TP-tunnel correspondence information;
[Fig. 17] Fig. 17 is a sequence diagram of an operation process when the terminal moves to a position controlled by a different LAC;
[Fig. 18] Fig. 18 is one example of a configuration of an access service network system according to an eighth embodiment of the present invention; and
[Fig. 19] Fig. 19 is one example of the configuration of the access service network system according to the third embodiment.

### EXPLANATIONS OF LETTERS OR NUMERALS

- 1: IP network
- 1A: Network
- 2a, 2b, 8a, 8b: LAC
- 3, 3a, 3b: LNS
- 4: Home agent
- 5a to 5f: Access point
- 6: L2TP concentrator
- 7: Home agent with L2TP concentrator function
- 10a to 10c: ISP network
- 11: Terminal
- 20a, 20b: Virtual access instance

### BEST MODE(S) FOR CARRYING OUT THE INVENTION

Exemplary embodiments of an access service network system and an access device, an L2TP tunnel line concentrator, and a home agent that are used in this access service network system, and a method of providing an access service, according to the present invention will be explained in detail below with reference to the accompanying drawings.

### First Embodiment

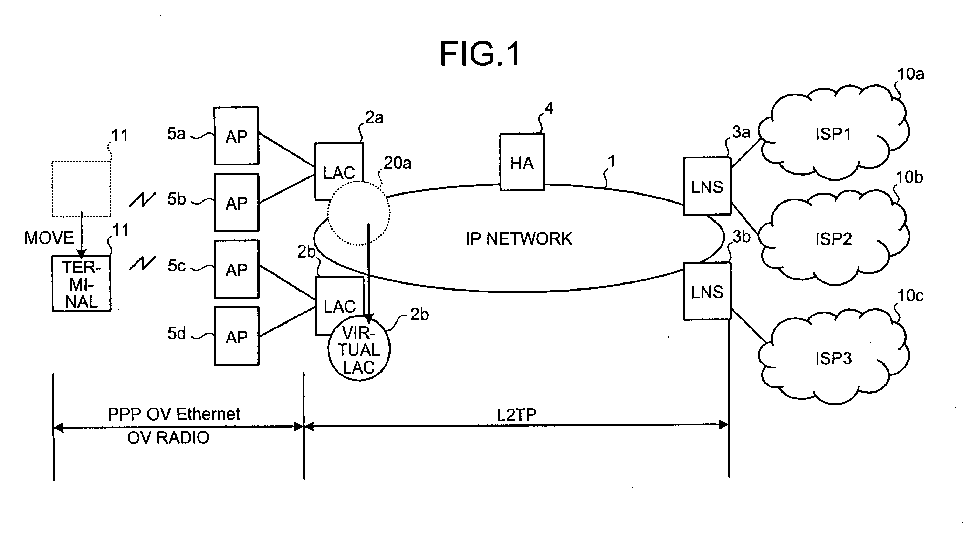

Fig. 1 is a schematic diagram of one example of a configuration of an access service network system according to the present invention. This access service network system includes ISP networks 10a to 10c owned by respective ISP (Internet Service Providers), an IP network 1 that is connected to the ISP networks 10a to 10c and becomes a backbone of an access service network company, and a terminal 11 owned by a user who accesses the ISP networks 10a to 10c via the IP network 1.

The IP network 1 includes a rooter and a layer 2 switch, and transmits data between the user terminal 11 and the ISP networks 10a to 10c, based on the L2TP. LACs 2a and 2b that accommodate the terminal 11 owned by the user are installed in the IP network 1. The LACs (L2TP access concentrators) 2a and 2b are a kind of access device disposed at the edge at the user side of the IP network 1 as an L2TP transfer network. The LACs 2a and 2b become starting points of a tunnel formed by the L2TP. The LACs 2a and 2b are connected to access points (denoted as APs in the drawings) 5a to 5d of a radio LAN (Local Area Network) and a CDMA (Code Division Multiple Access) that are installed to accommodate the terminal 11 with radio. The access points 5a to 5d execute radio communication with the terminal 11 in an optional system. LNSs (L2TP network servers) 3a and 3b are installed in the boundary between the IP network 1 and the ISP networks 10a to 10c. The LNSs 3a and 3b become end points (the other starting points) of a tunnel formed by the L2TP. When the ISP owns the LNSs 3a and 3b, the LNSs 3a and 3b are server devices of the ISP, and when the access service network company owns the LNSs 3a and 3b, plural ISP networks are connected. A home agent (denoted as HA in the drawings) 4 of the Mobile IP is installed inside the IP network.

The terminal 11 includes an information communication terminal that can obtain desired information from the ISP networks 10a to 10c, by performing radio communication with the access points 5a to 5d in a predetermined system corresponding to the access points 5a to 5d such as a radio LAN system and a CDMA system. An explanation is made about an example of the terminal 11. that can perform mobile communication by crossing over the plural access points 5a to 5d along the move of the user.

The LACs 2a and 2b include a virtual-access-instance generating unit that internally generates virtual access instances (denoted as virtual LACs in the drawings) 20a and 20b in the user terminal 11 that requests a start of a PPPoE (Point to Point Protocol over Ethernet (registered trademark)), and a virtual-access-instance moving unit that transmits information concerning the virtual access instances 20a and 20b corresponding to the terminal 11 to the LAC at a move destination, along a move (handover) of the terminal 11 between the LACs 2a and 2b, in addition to the device configuration that is conventionally used.

The virtual access instances 20a and 20b are generated corresponding to the terminal 11 that accesses the access service network system, and have a function of setting an L2TP connection between the LNSs 3a and 3b connected to the access destination. As described above, the virtual access instances 20a and 20b move between the LACs 2a and 2b that accommodate the access points 5a to 5d which execute radio communication with the terminal 11, along the move of the terminal 11. Therefore, the virtual access instances 20a and 20b communicate with the LNSs 3a to 3b, by using the Mobile IP. Accordingly, the virtual access instances 20a and 20b have home IP addresses and care-of addresses, and have a function of registering a current position in the home agent 4. However, the home IP addresses are not set in the virtual access instances 20a and 20b in the initial state, and are allocated from the home agent 4 when the first current position is registered in the home agent 4.

The home agent 4 has a function of allocating the home IP addresses to the virtual access instances 20a and 20b, upon receiving the first position registration from the virtual access instances 20a and 20b generated inside the LACs 2a and 2b, in addition to the device configuration that is conventionally used. The home agent 4 also holds virtual-access-instance address information which relates the positions (care-of addresses) of the virtual access instances 20a and 20b that communicate while moving between the LACs 2a and 2b and the home IP addresses, and functions as a home agent of the virtual access instances 20a and 20b. In other words, the home agent 4 transmits information between the virtual access instances 20a and 20b and the LNSs 3a and 3b, by using the Mobile IP tunnel between the virtual access instances 20a and 20b.

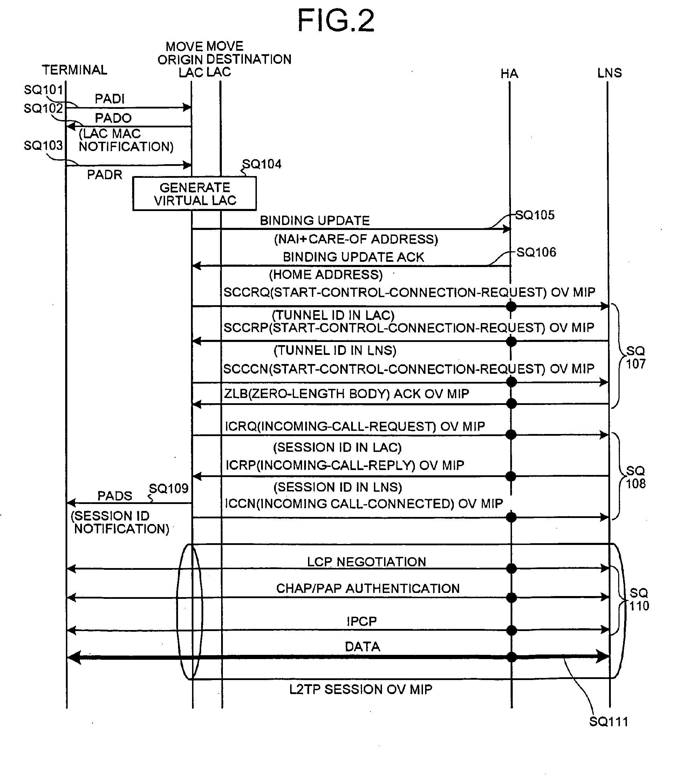

A communication method in the access service network system having the above configuration is explained with reference to a sequence diagram. Fig. 2 is a sequence diagram of a process procedure of an operation performed when a terminal first radio-accesses the access service network system. When the terminal 11 accesses the LNS 3a as a server device of the ISP network 10a, via the access point 5b and the LAC 2a in Fig. 1, for example, the terminal 11 starts the sequence of the general-purpose PPP over Ethernet (registered mark) (hereinafter, PPPoE) or the PPP over Radio. An explanation is explained below particularly based on the PPPoE.

First, the terminal 11 executes a discovery process to establish a PPPoE session via the access point 5b. In other words, the terminal 11 transmits a PPoE Active Discovery Initiation (hereinafter, PADI) (SQ101), and the LAC2a receives this PADI and responds a PPPoE Active Discovery Offer (hereinafter, PADO) to the terminal 11 (SQ102). Based on these processes, the LAC 2a and the terminal 11 can recognize mutual MAC addresses. The terminal 11 formally requests the LAC 2a to start the PPPoE session, using an Active Discovery Request (hereinafter, PADR) (SQ103). Accordingly, the LAC 2a internally generates the virtual access instance 20a that handles the terminal 11 (SQ104).

The virtual access instance 20a generated within the LAC 2a transmits a Binding Update to the home agent 4. In this case, the virtual access instance 20a sets the IP address of the LAC 2a to the care-of address, and sets an NAI (Network Access Identifier) to the home address (SQ105). The NAI is an ID that identifies the terminal 11 at the PPP connection. A MAC address is assumed for this ID, for example. Upon receiving the Binding Update, the home agent 4 allocates the home IP address to be used thereafter by the virtual access instance 20a, stores virtual-access-instance address information having the home IP address related to this position (care-of address = the IP address of the LAC 2a), and notifies a Binding Update Ack to the LAC 2a (SQ106).

Next, the virtual access instance 20a sets the L2TP connection with the LNS 3a, using the L2TP. A selection of the LNS and a setting sequence of the L2TP connection are based on the specification of the conventional L2TP. In other words, the virtual access instance 20a exchanges the ID of the L2TP tunnel (hereinafter, "L2TP tunnel ID") to transfer the PPP connection, using a Start-Control-Connection-Request (hereinafter, SCCRQ), a Start-Control-Connection-Reply (hereinafter, SCCRP), a Start-Control-Connection-Connected (hereinafter, SCCCN), and a Zero-Length Body (hereinafter, ZLB) Ack (SQ107), and exchanges the ID (hereinafter, "L2TP session ID") of the session that identifies the PPP connection in the L2TP tunnel, using an Incoming-Call-request (hereinafter, ICRQ), an Incoming-Call-reply (hereinafter, ICRP), and an Incoming-Call-Connected (hereinafter, ICCN) (SQ108). The virtual access instance 20a returns the determined L2TP session ID to the terminal 11, using a PPPoE Active Discovery Session-confirmation (hereinafter, PADS) (SQ109). At this stage, the PPP connection of the terminal 11 reaches the LNS 3a via the virtual access instance 20a of the LAC 2a through the L2TP tunnel. Because the virtual access instance 20a communicates with the LNS 3a using the home IP address, the above communication is performed via the home agent 4, and the L2TP tunnel generated between the home agent 4 and the LAC 2a is covered with the "IP in the IP tunnel" of the Mobile IP.

In the PPP connection, the terminal 11 executes a sequence of a Link Control Protocol (hereinafter, LCP) negotiation, and authentication of a Challenge Handshake Authentication Protocol (hereinafter, CHAP), and a Password Authentication Protocol (hereinafter, PAP), and an Internet Protocol Control Protocol (hereinafter, IPCP) between a server device (the LNS 3a, in this case) of the ISP that manages the ISP network 10a, and the ISP processes the IP address allocation (SQ110). With this arrangement, communication of the PPP data using the L2TP tunnel is started (SQ111). In this case, the virtual access instance 20a can use a snoop unit to obtain an authentication key and an IP address, when necessary.

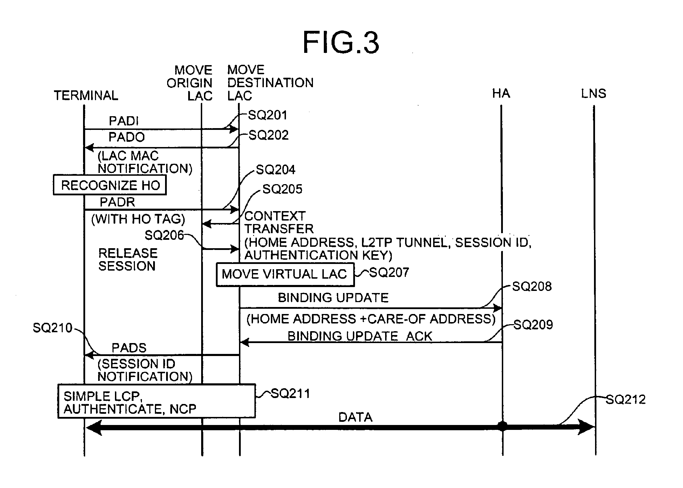

Fig. 3 is a sequence diagram of an operation process of the access service network system when the terminal moves to a position controlled by a different LAC. Assume that the terminal 11 moves from a position controlled by the LAC 2a to a position controlled by the LAC 2b, by executing radio communication with the access point 5c, in Fig. 1. First, the terminal 11 detects that the terminal 11 has moved from a position controlled by the LAC 2a to a position controlled by the LAC 2b, using the address of the LAC exchanged in the sequence of the PADI and the PADO. In other words, the terminal 11 detects a handover (SQ201 to SQ203). Next, the terminal 11 transmits a PADR, added with a parameter showing a handover request, to the LAC 2b of the move destination SQ204). In this case, the terminal 11 sets a MAC address of the LAC 2a of the move origin, to the PADR.

The LAC 2b at the move destination detects the handover request in the PADR received from the terminal 11, and starts a transfer of mobile terminal information (hereinafter, "context transfer") necessary to access the server device (the LNS 3a, in this case) of the ISP via the IP network 1, to the LAC 2a extracted from the MAC address of the move origin set in the PADR (SQ205 to SQ206). In the context transfer, the LAC 2b at the move destination notifies the LAC 2a at the move origin about an ID (for example, a MAC address) that identifies the terminal 11, and the LAC 2a extracts the virtual access instance 20a corresponding to the ID of the terminal 11. The LAC 2a transfers the home IP address owned by the virtual access instance 20a, the L2TP tunnel ID, the L2TP session ID, and mobile terminal information such as the authentication key and the IP address of the terminal 11 when necessary, to the LAC 2b, and releases the L2TP session with the LNS 3a. The LAC 2b generates the virtual access instance 20b that handles the terminal 11, upon reception of the transferred mobile terminal information. In other words, the virtual access instance also moves from the LAC 2a to the LAC 2b, along the move of the terminal 11 (SQ207).

The virtual access instance 20b that is generated within the LAC 2b at the move destination executes a new position registration in the home agent 4. In other words, the LAC 2b transmits a Binding Update including the home IP address and the care-of address of the IP address of the LAC 2b, to the home agent 4 (SQ208). The home agent 4 receives the Binding Update from the LAC 2b, stores the virtual-access-instance address information including a set of the home IP address of the virtual access instance 20b corresponding to the terminal 11 and the care-of address, into the own device, and transmits the Binding Update Ack to the terminal 11 (SQ209). The LAC 2b returns the PADS including the generated L2TP session ID to the terminal 11 (SQ210). Thereafter, the terminal 11 executes a simple authentication procedure and an IP address confirmation procedure with the virtual access instance 20b, when necessary (SQ211), and the terminal 11 performs data communication with the LNS 3a of the ISP network 10a (SQ212).

In the above procedure, the L2TP tunnel generated first between the home agent 4 and the LAC 2a is transferred to the LAC 2b as a new transfer destination, by the "IP in IP tunnel" of the Mobile IP, along the move of the terminal 11 between different LACs. In other words, because the communication between the LAC and LNS is performed via the home agent 4, a message from the LNS to the LAC is once transferred to the home agent 4, and the home agent 4 extracts the care-of address of the virtual access instance corresponding to the IP address of the message destination, based on the virtual-access-instance address information registered in the own device, and transmits the message received at the care-of address, by a Mobile IP capsuling. With the above arrangement, the move of the virtual access instances 20a and 20b as communication parties between the LACs 2a and 2b can be concealed to the LNSs 3a and 3b. Therefore, the LNSs 3a and 3b do not need to understand the move of the terminal 11, and do not need to execute process for this purpose.

According to the first embodiment, even when the terminal 11 accommodated in the access devices (the LACs 2a and 2b) managed by the access service network company is moving while accessing the ISP networks 10a to 10c, mobile permeability can be given to the PPP connection that is set by the access devices (the LACs 2a and 2b), thereby providing a service of smooth connection to the ISP networks 10a to 10c. Because an integrated control device such as the conventional VPN management device is not present in the configuration of the access service network system, there is an effect that a network having strong false resistance can be provided.

### Second Embodiment

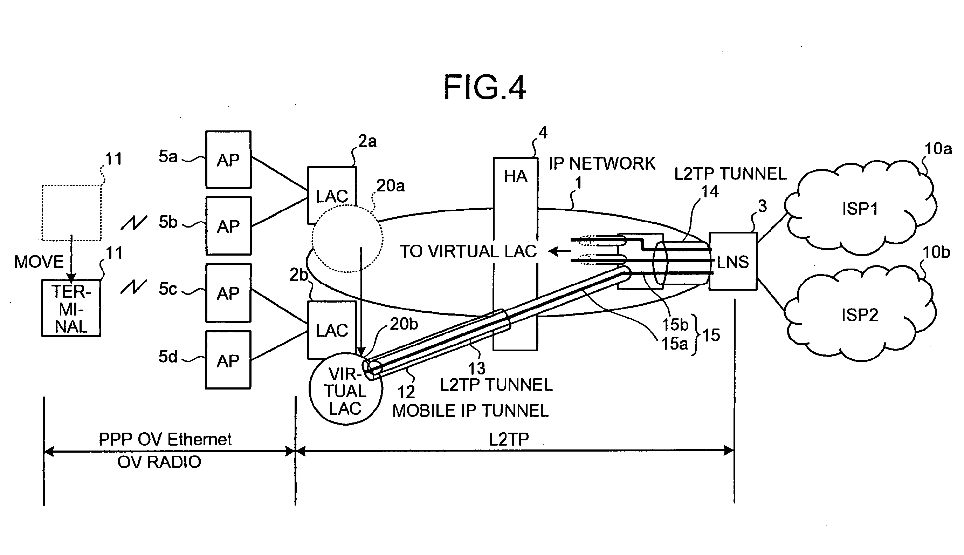

Fig. 4 is a schematic diagram of one example of a configuration of an access service network system according to a second embodiment of the present invention. This access service network system has a configuration shown in Fig. 1 according to the first embodiment, further including in the IP network 1 an L2TP concentrator 6 that distributes plural L2TP tunnels from the virtual access instances 20a and 20b inside the LACs 2a and 2b, in one L2TP tunnel, to the LNS 3. According to the access service network system shown in Fig. 4, plural ISP networks 10a and 10b are connected to one LNS 3, and one L2TP concentrator 6 is provided for one LNS 3. Like reference numerals denote like constituent elements as those shown in Fig. 1 according to the first embodiment, and explanations thereof are omitted.

At the LACs 2a and 2b side, the L2TP concentrator 6 concentrates individual L2TP tunnels 13 connected from the LACs 2a and 2b (the virtual access instances 20a and 20b) to the LNS 3. At the LNS 3 side, one L2TP tunnel 14 in which the L2TP tunnels 13 are concentrated is connected to the LNS 3. In other words, the L2TP concentrator 6 plays a role of a line concentrator of the L2TP tunnels. By playing the above role, the L2TP concentrator 6 has a function of dynamically relating a session 15a of the L2TP tunnel 13 generated between the LACs 2a and 2b and the L2TP concentrator 6 to a session 15b of the L2TP tunnel 14 generated between the LNS 3 and the L2TP concentrator 6. Therefore, the L2TP concentrator 6 has L2TP-tunnel correspondence information having the session 15a of the L2TP tunnel 13 related to the session 15b of the L2TP tunnel 14.

In Fig. 4, the L2TP tunnel 13 is generated between the virtual access instance 20b and the L2TP concentrator 6. The L2TP tunnel 13 is further encircled by the Mobile IP tunnel 12, between the virtual access instance 20b and the home agent 4.

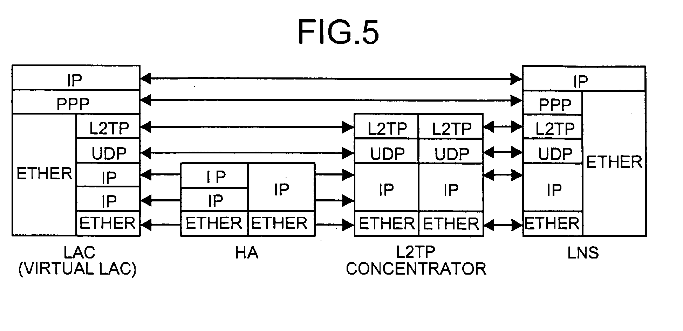

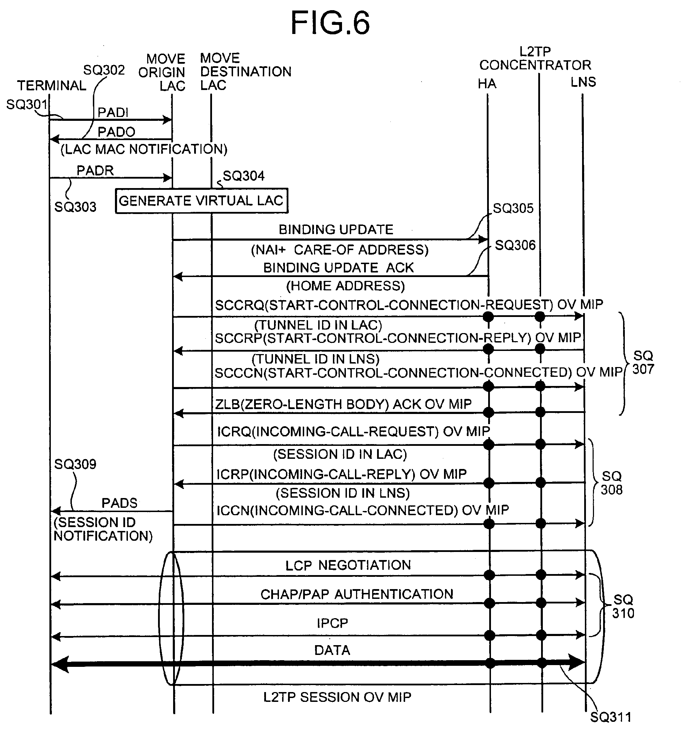

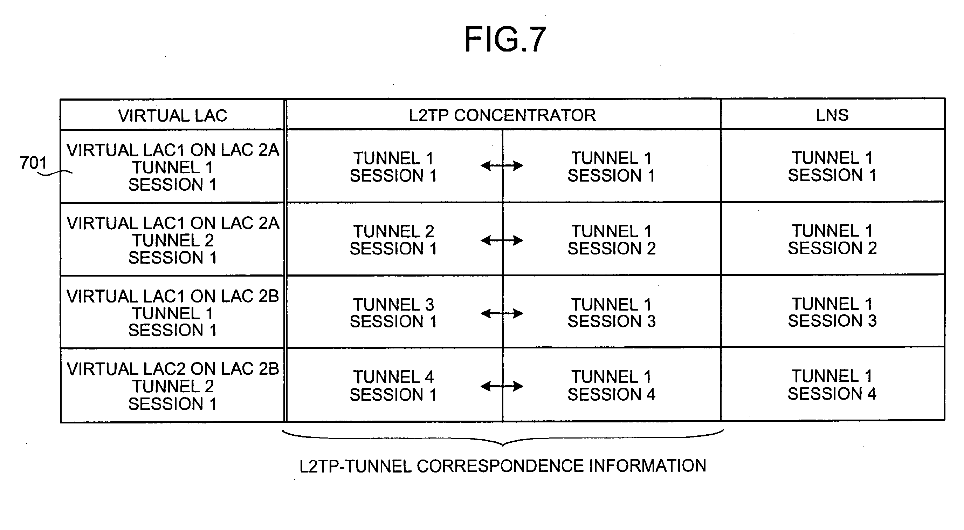

Fig. 5 is a schematic diagram of a protocol stack of an access service network including the L2TP concentrator, and Fig. 6 is a sequence diagram of a process procedure of an operation performed when a terminal first radio-accesses the access service network. Fig. 7 is one example of a mapping table of the L2TP tunnel. Fig. 5 is a protocol stack of a LAC (a virtual access concentrator), a home agent, an L2TP concentrator, and an LNS. As shown in Fig. 5, the L2TP concentrator 6 once stops the L2TP sequence. Particularly, the L2TP concentrator 6. ends an exchange step (SQ307) of the L2TP tunnel ID by the SCCRQ, the SCCRP, the SCCCN, and the ZLB Ack performed between the LAC and the LNS, and an exchange step (SQ308) of the L2TP session ID of the ICRQ, the ICRP, and the ICCN, that are performed between the LAC and the LNS in the sequence diagram shown in Fig. 6, and relays information. With this arrangement, the L2TP concentrator 6 allocates the own L2TP tunnel ID and the L2TP session ID, and replaces the L2TP tunnel ID of the L2TP tunnel and the L2TP session ID, thereby dynamically generating the L2TP-tunnel correspondence information shown in Fig. 7.

In an item "virtual LAC" in Fig. 7, a combination of the L2TP tunnel ID and the L2TP session ID that the virtual access instance uniquely adds to the session of the L2TP tunnel set between the virtual access instance generated within the LAC and the LNS (the L2TP concentrator) is shown. At the left side of an item "L2TP concentrator", a combination of the L2TP tunnel ID and the L2TP session ID that the L2TP concentrator uniquely adds to the session of the L2TP tunnel set between the LNS (the L2TP concentrator) and the virtual access instance is shown. At the right side of the item "L2TP concentrator", a combination of the L2TP tunnel ID and the L2TP session ID that the L2TP concentrator uniquely adds to the session of the L2TP tunnel set between the L2TP concentrator and the LNS is shown. Similarly, in an item "LNS", a combination of the L2TP tunnel ID and the L2TP session ID that the LNS uniquely adds to the session of the L2TP tunnel set between the LNS and the L2TP concentrator is shown. A part corresponding to the item "L2TP concentrator" in this mapping table corresponds to the L2TP-tunnel correspondence information generated by the L2TP concentrator 6. For example, in row 701, a combination of the L2TP tunnel ID and the L2TP session ID of the L2TP tunnel that the virtual access instance 1 inside the LAC 2a generates between the virtual access instance 1 and the LNS, is stored in each item. Because each device uniquely allocates an identifier to the same L2TP session, these unique identifiers are related to each other.

In the L2TP concentrator 6, the L2TP session in the L2TP tunnel connected to the virtual access instance is related to the L2TP session in one L2TP tunnel connected to the LNS, in one to one relationship. This correspondence is generated when a message exchange between the LAC and the LNS ends and the message is relayed. With this arrangement, the L2TP concentrator 6 appears as the LNS 3 from the virtual access instances 20a and 20b, and appears as the LACs 2a and 2b from the LNS 3. Particularly, because plural L2TP sessions are integrated in one L2TP tunnel from the viewpoint of the LNS 3, virtual access instances corresponding to the terminal appears as one LAC for the LNS 3.

While the sequence diagram shown in Fig. 6 is different from the sequence shown in Fig. 2 in that the L2TP concentrator is disposed between the home agent and the LNS of the sequence in Fig. 2, the content of the process shown in Fig. 6 is the same as that shown in Fig. 2, and, therefore, is not explained. The sequence of the operation process when the virtual access instance moves between different LACs is also similar to the sequence shown in Fig. 3 according to the first embodiment, and, therefore, is not explained.

According to the second embodiment, the LNS can look all virtual access instances as if these virtual access instances are one LAC. Therefore, a general-purpose LNS that is set for a fixed terminal can be used for a mobile terminal. In other words, based on the introduction of the L2TP concentrator, the LNS that cannot support a number of L2TP tunnels in excess of the set number of LACs can correspond to the number of L2TP tunnels that are generated between the virtual access instances generated corresponding to the terminal and the LNS. Consequently, the LNS can be used effectively.

### Third Embodiment

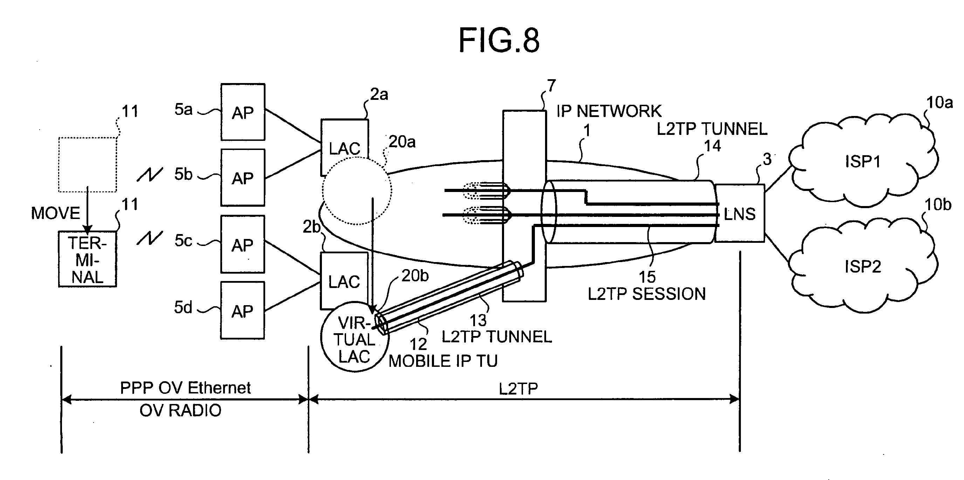

While the IP network includes the L2TP concentrator in the second embodiment, the function of the L2TP concentrator can be installed in the home agent. Fig. 8 is one example of a configuration of an access service network system according to a third embodiment of the present invention. In this access service network system, the home agent 4 shown in Fig. 4 according to the second embodiment is replaced by a home agent 7 with an L2TP concentrator function that has the function of the L2TP concentrator, and the L2TP concentrator 6 is excluded. Like reference numerals denote like constituent elements that are the same as those shown in Fig. 4 according to the second embodiment are, and their explanations are omitted. The home agent 7 with the L2TP concentrator function not only functions as the home agent of the terminal 11 and the virtual access instances 20a and 20b, but also functions as a tunnel concentrator line that collectively connects the L2TP tunnels from plural virtual access instances 20a and 20b in one L2TP tunnel to the LNS 3.

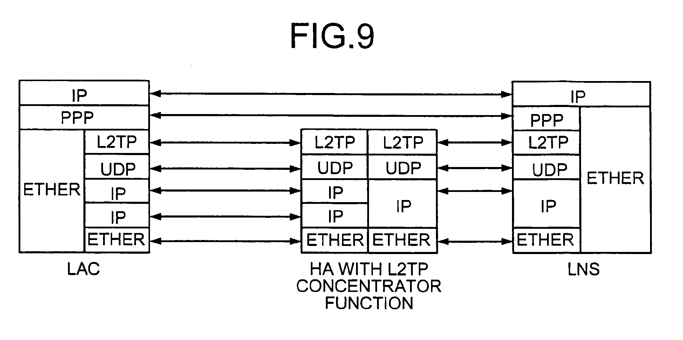

Fig. 9 is a schematic diagram of a protocol stack of the access service network system according to the third embodiment. As shown in Fig. 9, the home agent 7 functions as a point that integrates the virtual access instances 20a and 20b.

According to the third embodiment, because the function of the L2TP concentrator 6 is installed in the home agent 4, there is an effect that the L3TP concentrator 6 does not need to be additionally provided within the IP network 1, thereby preventing a complex system configuration, in addition to the effect of the second embodiment.

### Fourth Embodiment

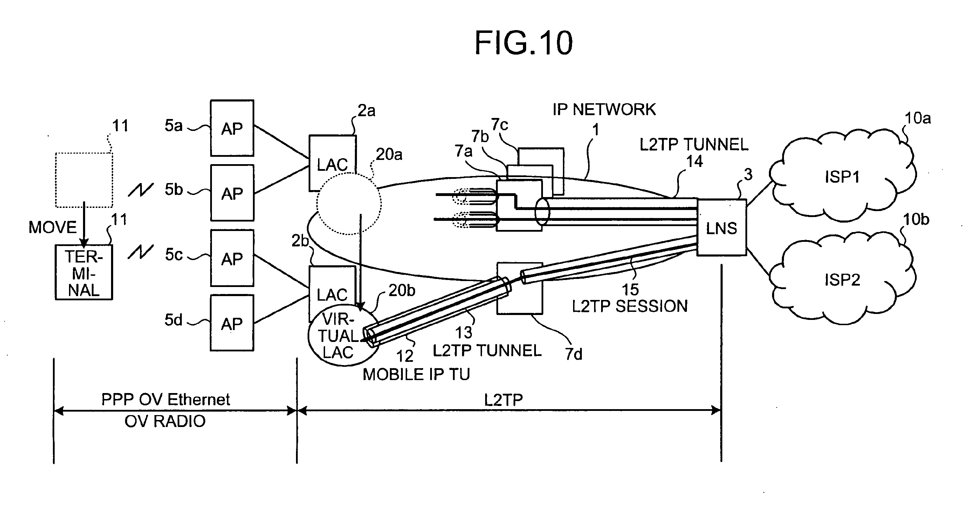

While only one home agent with the L2TP concentrator function is provided in one IP network in the third embodiment, plural home agents with the L2TP concentrator function can be installed in one IP network. Fig. 10 is one example of a configuration of an access service network system according to a fourth embodiment of the present invention. In this access service network system, plural home agents 7a to 7d having the L2TP concentrator function are installed in the IP network 1 in a distributed manner. In this configuration, the home agents 7a to 7d having the L2TP concentrator function appear as the LACs of the number of distributed load, from the viewpoint of the LNS 3. Like reference numerals denote like constituent elements as those shown in Fig. 4 according to the second embodiment, and explanations thereof are omitted.

In this access service network system, the terminal 11 first accesses the access service network system, and the virtual access instance 20a determines the home agents 7a to 7d having the L2TP concentrator function that control the virtual access instance 20a, at the timing when the LAC 2a generates the virtual access instance 20a. The virtual access instance 20a can select the home agents at random from the list that describes predetermined home agents having the L2TP concentrator function, or can select the home agents that manage the home IP address of the terminal 11 extracted from the ID that identifies the terminal 11. Other operations are similar to the operations explained in the first embodiment, and their detailed explanations are omitted.

According to the fourth embodiment, because the plural home agents 7a to 7b with the L2TP concentrator function are provided, the load of the respective functions of the home agent and the L2TP concentrator can be dispersed. Further, the general-purpose LNS 3 installed for a fixed terminal can be also used for a mobile terminal.

### Fifth Embodiment

In a fifth embodiment, a protocol stacker optimized based on the third embodiment is shown. Particularly because the L2TP tunnels are provided in the Mobile IP tunnel between the home agent and the virtual access instance, double tunnels are formed. This has a problem in that the IP header becomes thick and the using efficiency of a band is degenerated. Therefore, in the fifth embodiment, the virtual access instance and the home agent with the L2TP concentrator function degenerate the double tunnel to only the L2TP tunnel.

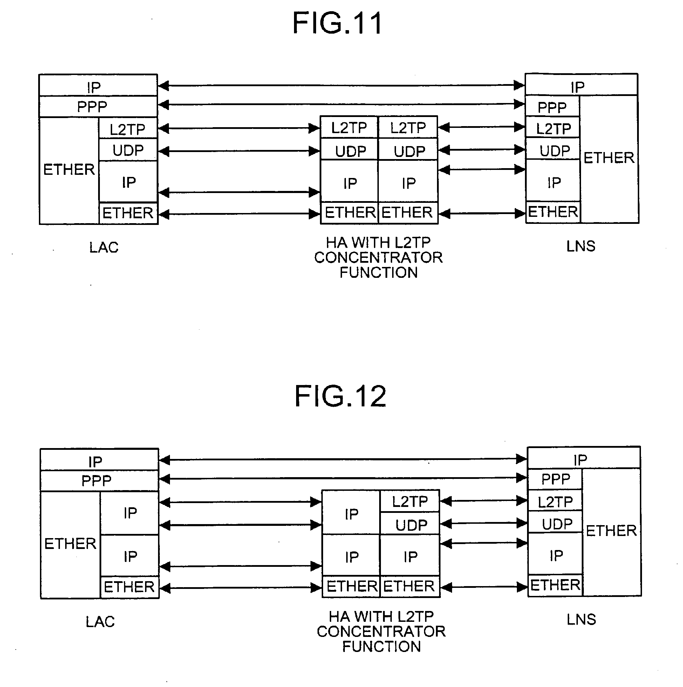

Fig. 11 is a schematic diagram of one example of an optimized protocol stack in the access service network system having a home agent with the L2TP concentrator function. In this case, an L2TP signaling and a Mobile IP signaling are used as they are, and when the virtual access instances 20a and 20b and the home agent 7 with the L2TP concentrator function transmit and receive data, the "IP in IP capsuling" of the Mobile IP is not used. Therefore, the care-of IP address of the Mobile IP is degenerated by regarding this IP address as the same as the destination IP address of the L2TP, and the home IP address of the Mobile IP is not actually used. Accordingly, the virtual access instances 20a and 20b are used for the information of the L2TP (for example, a combination of the L2TP tunnel ID and the L2TP session ID) as the IDs that uniquely identify the virtual access instances 20a and 20b.

According to the fifth embodiment, the virtual access instances 20a and 20b and the home agent 7 with the L2TP concentrator function degenerate the protocol stack so as not to form double tunnels, without using the capsuling of the Mobile IP. Therefore, a move of the L2TP tunnel can be supported, using only the signaling of the Mobile IP. Because the size of the header of the packet transmitted and received can be suppressed, there is also an effect that the using efficiency of a band improves.

### Sixth Embodiment

In a sixth embodiment, an optimized protocol stack is shown, like in the fifth embodiment. In the sixth embodiment, the virtual access instances and the home agent with the L2TP concentrator function degenerate the double tunnel of the L2TP tunnel and the Mobile IP tunnel formed between the virtual access instances and the home agent with the L2TP concentrator function, to only the Mobile IP tunnel.

Fig. 12 is a schematic diagram one example of an optimized protocol stack in the access service network system having a home agent with the L2TP concentrator function. In this case, an L2TP signaling and a Mobile IP signaling are used as they are, and when the virtual access instances 20a and 20b and the home agent 7 with the L2TP concentrator function transmit and receive data to and from each other, the L2TP capsuling is not used. In this case, the destination IP address of the L2TP is degenerated by regarding this IP address as the same as the care-of IP address of the Mobile IP, and only the home agent 7 with the L2TP concentrator function and the LNS 3 use the information of the L2TP (for example, the L2TP tunnel ID and the L2TP session ID).

In this protocol stack configuration, the home IP address is used to identify the virtual access instances 20a and 20b. The L2TP tunnel ID and the L2TP session ID of the L2TP can be locally held corresponding to the home IP address when necessary.

According to the sixth embodiment, the virtual access instances and the home agent with the L2TP concentrator function degenerate the protocol stack so as not to form double tunnels, without using the capsuling of the L2TP. Therefore, a move of the Mobile IP tunnel can be supported, using only the signaling of the L2TP. Because the size of the header of the packet transmitted and received can be suppressed, there is also an effect that the using efficiency of a band improves.

### Seventh Embodiment

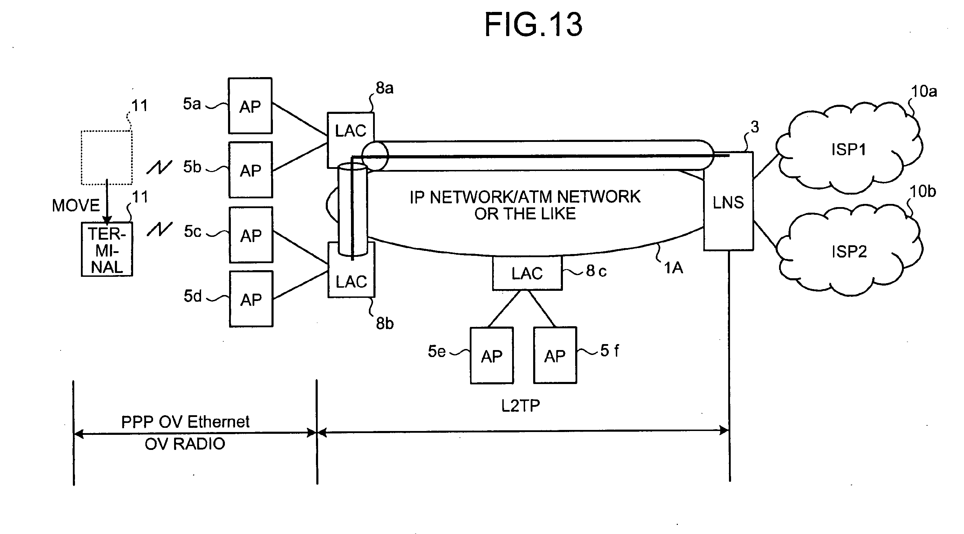

Fig. 13 is a schematic diagram of one example of a configuration of an access service network system according to a seventh embodiment of the present invention.
According to this access service network system, the IP network 1 shown in Fig. 1 according to the first embodiment includes a network 1A of the IP network and the ATM network, and the home agent 4 is not disposed. LACs 8a and 8b that are disposed by a plural number do not have a function of generating a virtual access instance, and, instead, have a configuration having a tunnel-extension correspondence LAC that has a function of extending the L2TP tunnel between the L2TPs.

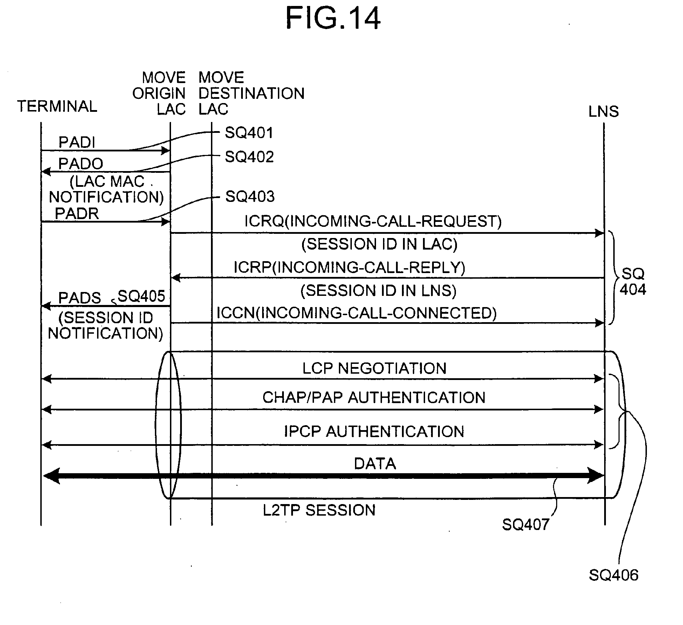

An operation process in the access service network system having this configuration is explained with reference to a sequence diagram. Fig. 14 is a sequence diagram of a process procedure of an operation performed when a terminal first radio-accesses the access service network. The operation that the terminal 11 accesses the LNS 3 connected to the ISP network 10a via the access point 5a and the LAC 8a in Fig. 13 is explained as an example.

When the terminal 11 accesses the LAC 8a via the access point 5b, the terminal 11 executes a PPPoE discovery sequence (PADI to PADR) to establish a PPPoE session (SQ401 to SQ403). In the system having the network configuration as shown in Fig. 13, it is general that the LAC 8a has already set an L2TP tunnel between the LNS 3 and the LAC 8a at a startup timing of the device. Therefore, the LAC 8a sets an L2TP session between the LNS 3 as an access destination and the LAC 8a, by using a sequence of the ICRQ, the ICRP, and the ICCN of the L2TP session in the PPPoE discovery sequence (SQ404). After setting this L2TP session, the LAC 8a transmits the PADS that sets this L2TP session ID, to the terminal 11 (SQ405). A selection of the LNS 3 (the L2TP tunnel) and a setting sequence of the L2TP session follow the conventionally-known specification of the L2TP. As a result, L2TP session IDs that identify the PPP connection are exchanged between the LAC 8a and the LNS 3, thereby completing the L2TP tunnel that conveys the PPP connection.

Thereafter, the terminal 11 executes a sequence of LCP negotiation with the ISP, authentication of CHAP and PAP, IP address allocation by the ISP based on the IPCP, etc. (SQ406), and starts PPP data communication (SQ407). In this case, the LAC 8a can obtain an authentication key and an IP address, using a snoop unit.

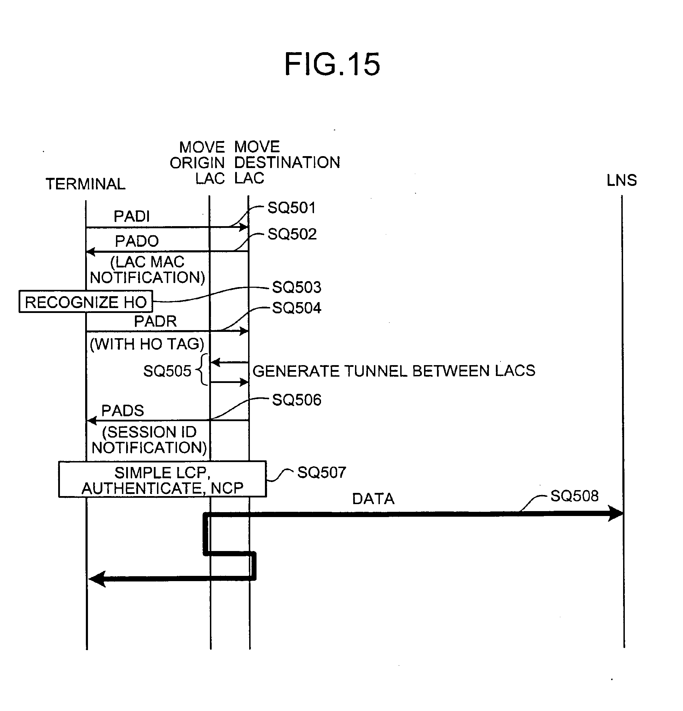

Fig. 15 is a sequence diagram of an operation process when a terminal moves to a position controlled by a different LAC. A move of the terminal 11 from the access point 5b managed by the LAC 8a to the access point 5c managed by the LAC 8b in Fig. 13 is explained below as an example. First, the terminal 11 looks at the address of the LAC that communicates in the process of the PADI and the PADO (SQ501 and SQ502), and recognizes that the terminal 11 has moved to a position controlled by a different LAC, that is, the terminal 11 has been handed over from a position controlled by the LAC 8a to a position controlled by the LAC 8b (SQ503). Next, the terminal 11 transmits a PADR added with a parameter showing a handover request, to the LCA 8b of the move destination (SQ504). In this case, the terminal 11 sets the MAC address of the LAC 8a at the move origin.

Upon detection of the handover request within the PADR received from the terminal 11, the LAC 8b starts a transfer of context to the LAC 8a extracted from the MAC address of the move origin set in the PADR (SQ505). In this context transfer, the LAC 8b allocates an L2TP tunnel ID and a new L2TP session ID to the L2TP tunnel that is newly added between the LAC 8a and the LAC 8b, and notifies the LAC 8a about these IDs and the ID (such as the MAC address) of the terminal 11. The LAC 8a also allocates an L2TP tunnel ID and an L2TO session ID to the L2TP tunnel of the opposite direction that is newly added between the LAC 8a and the LAC 8b, and transfers these IDs and the authentication key and the IP address of the terminal 11 to the LAC 8b when necessary.

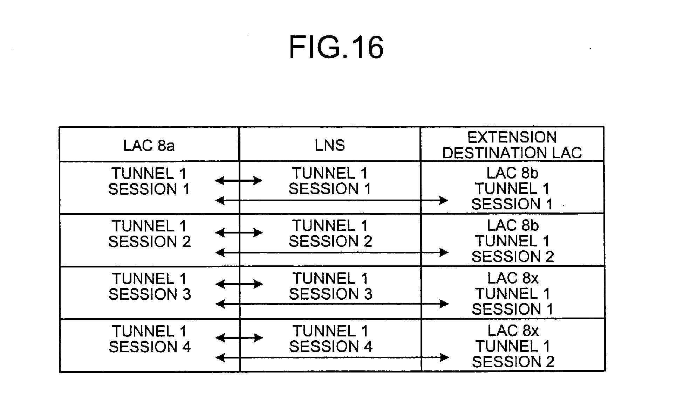

Thereafter, the LAC 8b at the move destination transmits the PADS including the session ID of the L2TP tunnel newly set to the terminal 11 (SQ506). The terminal 11 executes a simple authentication procedure and an IP address confirmation procedure with the LAC 8b, when necessary (SQ507). Based on these procedures, the LAC 8a dynamically generates L2TP-tunnel correspondence information shown in Fig. 16, for example, and the L2TP tunnel which extends from the LAC 8a to the LAC 8b as shown in Fig. 13 is completed on the IP network 1A. Accordingly, data using this L2TP tunnel is transmitted and received (SQ508)..

The L2TP-tunnel correspondence information shown in Fig. 16 shows a correspondence relationship between the L2TP session set between the LAC that the terminal 11 first accesses (hereinafter, "initial LAC") and the LNS, and the L2TP session extended from this LAC. An item "LAC 8a" and an item "LNS" show a correspondence between the L2TP tunnel ID and the L2TP session ID of the L2TP tunnel set in advance, between the LAC 8a and the LNS 3. An item "extension destination LAC" shows a correspondence between the L2TP tunnel ID and the L2TP session ID of the L2TP tunnel set between the initial LAC 8a and the LAC at the move destination, when the terminal 11 moves from the initial LAC to other LAC. This "extension destination LAC" item is rewritten each time when the terminal 11 moves by crossing over between the LACs. Fig. 16 shows L2TP channel correspondence information of four different sessions within one L2TP tunnel that is set between the LAC 8a and the LNS.

Based on the above procedure, the LAC 8a extends the L2TP tunnel between the LNS 3 and the LAC 8a to the new distribution destination LAC 8b. Because the move of the terminal 11 between' the LACs 8a and 8b is concealed to the LNS 3, a new set process is necessary at the LNS 3, following this move. The L2TP tunnel that is extended thereafter is generated, with the extended LAC 8a set as a starting point. For example, when the terminal 11 further moves to a position controlled by the LAC 8c, an L2TP tunnel that is extended to between the LAC 8b and the LAC 8c is generated, after the move.

According to the seventh embodiment, even when the access service network accommodates the movable terminal 11, a smooth connection service of the PPP session can be provided to the move of the terminal 11. The existing LNS 3 can be also used as it is. Further, communication of the moving terminal can be connected to a network that is not adapted to the Mobile IP, without disconnecting the communication of the terminal that moves between the LACs.

### Eighth Embodiment

In an eighth embodiment, when the LACs are changed over along the move of the terminal 11 in the access service network system according to the seventh embodiment, a resetting of a tunnel between the LACs such that the LAC that the terminal 11 first accesses always becomes an anchor is explained.

The LACs 8a and 8b have such a function that when the terminal 11 moves between different LACs, the LAC that the terminal 11 first accesses extends the L2TP tunnel between this LAC and the LAC after the move.

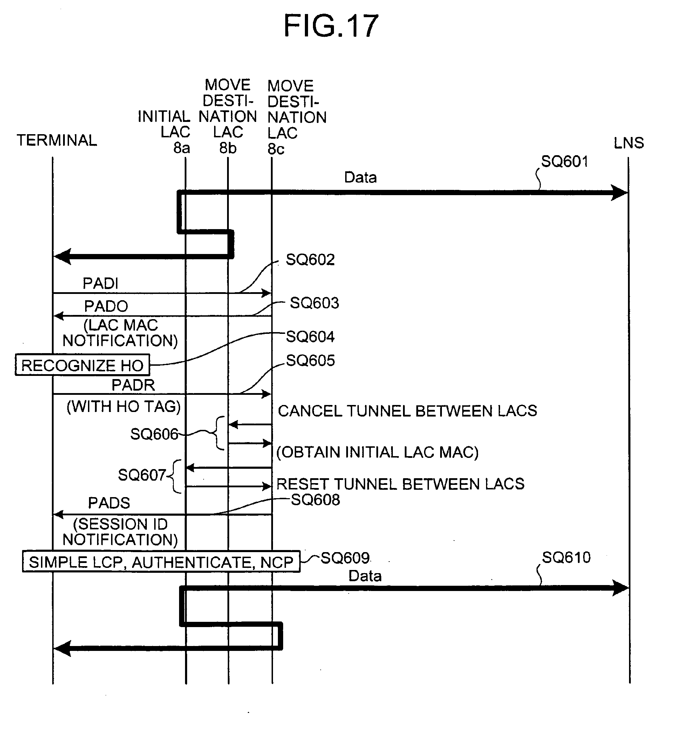

An explanation is made of an example where the terminal 11 sequentially moves in the order of the first LAC 8a to the move destination LAC 8b to the move destination LAC 8c in Fig. 13. The operation process that the terminal 11 radio-accesses the access service network (the initial LAC 8a) is the same as the sequence of the operation shown in Fig. 14, and the operation process of the move of the terminal from the initial LAC 8a to the move destination LAC 8b is the same as the operation sequence shown in Fig. 15. Therefore, these explanations are omitted. Fig. 17 is a sequence diagram of an operation process of the access service network system when the, terminal moves from the move destination LAC 8b to the different move destination LAC 8c. In Fig. 17, time (SQ601) when the terminal 11 communicates after moving to the move destination LAC 8b is set as a starting point. In this case, the L2TP tunnel is set between the move destination LAC 8b and the LNS 3 via the initial LAC 8a, as shown in Fig. 13.

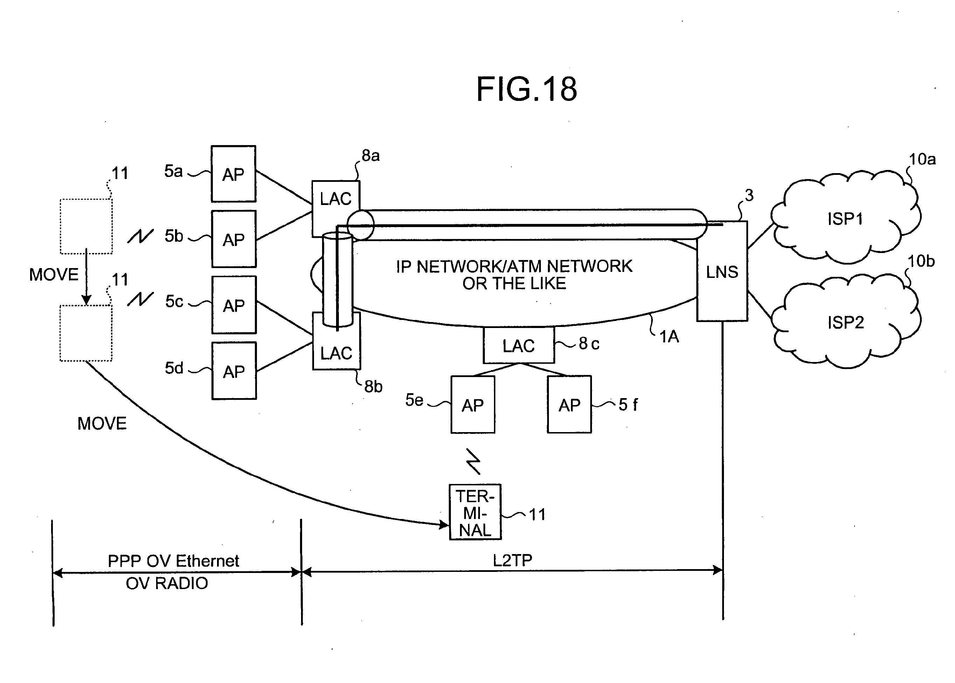

Thereafter, when the terminal 11 further moves to the move destination LAC 8c as shown in Fig. 18, the terminal 11 looks at the address of the LAC with which the terminal 11 communicates using a PADI and a PADO (SQ602, SQ603), and detects that the communication is handed over from the position controlled by the LAC 8b to the position controlled by the LAC 8c (SQ604). The terminal 11 transmits a PADR, added with a parameter showing a handover request, to the move destination LAC 8c (SQ605). In this case, the terminal 11 sets a MAC address of the move origin LAC 8b in the PADR.

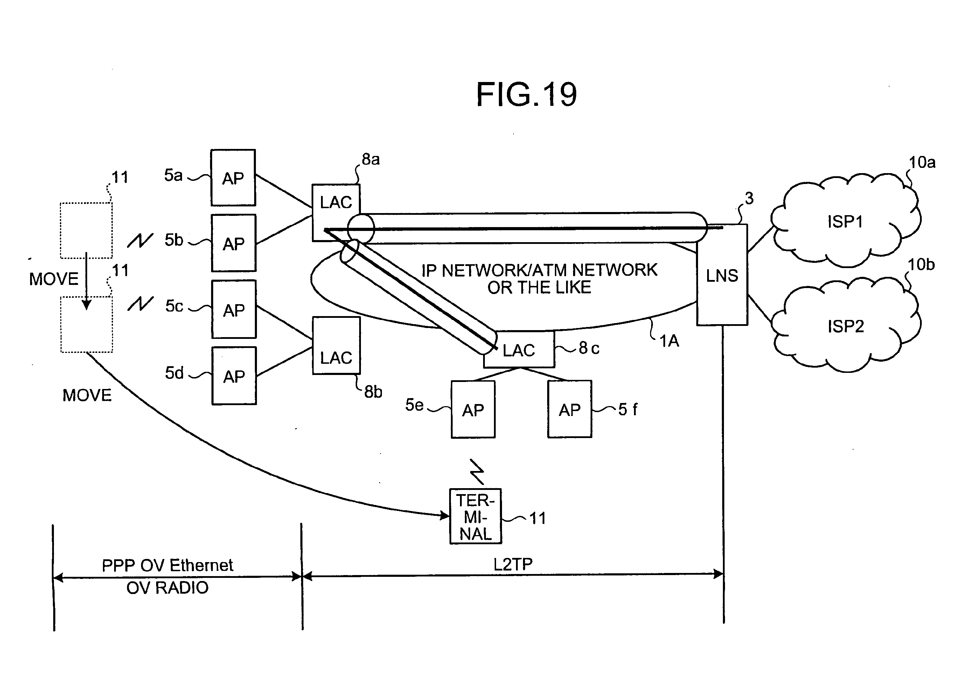

When the LAC 8c at the move destination detects the handover request in PADR, this LAC 8c obtains address information (such as the MAC address) of the initial LAC 8a from the move origin LAC 8b, and cancels the L2TP tunnel generated between the initial LAC 8a and the move origin LAC 8b (SQ606). Thereafter, the move destination LAC 8c starts a transfer procedure of move terminal information including an L2TP tunnel to be newly generated, an ID concerning the L2TP session, and an ID of the terminal 11, to the initial LAC 8a that becomes the relay point obtained at SQ606, and the new L2TP tunnel is set between the move destination LAC 8c and the LNS 3 via the initial LAC 8a (SQ607). When the new L2TP tunnel is set between the initial LAC 8a and the move destination LAC 8c, the LAC 8c at the move destination transmits a PADS including the L2TP session ID to the terminal 11. The terminal 11 executes a simple authentication procedure and an IP address confirmation procedure with the LAC 8c, when necessary (SQ609). Based on these procedures, the L2TP tunnel that is extended from the LAC 8a to the LAC 8c is completed on the IP network 1A, as shown in Fig. 19, and data is transmitted and received using this L2TP tunnel (SQ610).

According to the eighth embodiment, the move of the LAC along the move of the terminal 11 can be concealed to the LNS. Only the L2TP tunnel that is extended from the LAC that the terminal 11 first accesses to the LAC at the move destination is generated. The L2P tunnel is not extended by plural LACs. Therefore, using efficiency of a band increases.

### INDUSTRIAL APPLICABILITY

As described above, the access service network system according to the present invention is useful for a system that provides a movable terminal with a communication path from this terminal to the ISP network.

## Claims

1. An access service network system that establishes a communication connection between a mobile terminal and a connection destination network by using an L2TP in an access service network that includes the mobile terminal, a plurality of access devices for tunneling layer 2 data from the mobile terminal in an IP packet, a server device that terminates the tunneling and the layer 2 data and that is connected to the connection destination network of the mobile terminal, and a home agent for continuing a communication of the mobile terminal that crosses between the access devices during communication, wherein
the access device includes
a virtual-access-instance generating unit that generates for each mobile terminal a virtual access instance which generates an L2TP tunnel between the server device and the mobile terminal, when the mobile terminal accesses the server device, and
a virtual-access-instance moving unit that moves the virtual access instance to an access device at a move destination, when the mobile terminal moves by crossing over between the access devices,
the virtual access instance includes a unit that executes a position registration, using a generated virtual access instance or a move-destination access device as a care-of address, in the home agent, when the virtual access instance is generated or moves to a position controlled by a different access device, and
the home agent includes
a unit that stores virtual-access-instance address information that relates the care-of address of the virtual access instance to a home address which is first allocated at the generation time of the virtual access instance, based on the position registration from the virtual access instance, and
a unit that transmits a message destined to a home address of the virtual access instance, to the care-of address, using a Mobile IP tunnel, based on the virtual-access-instance address information.

2. The access service network system according to claim 1, further comprising:
an L2TP tunnel concentrator that concentrates a plurality of L2TP tunnels from the virtual access instance into one tunnel, and distributes the concentrated tunnels to the server device, between the access device and the server device.

3. The access service network system according to claim 2, wherein
the access device and the home agent further include a unit that transmits an IP packet to be exchanged between the two, by degenerating tunnels to only an L2TP tunnel.

4. The access service network system according to claim 2, wherein
the access device and the home agent further include a unit that transmits an IP packet to be exchanged between the two, by degenerating tunnels to only a Mobile IP tunnel.

5. The access service network system according to claim 1, wherein
the home agent further includes an L2TP tunnel concentrator that concentrates a plurality of L2TP tunnels from the virtual access instance into one tunnel, and distributes the concentrated tunnel to the server device.

6. The access service network system according to claim 5, wherein
a plurality of home agents are disposed within the access service network.

7. The access service network system according to claim 6, wherein
the virtual-access-instance generating unit of the access device further includes a function of selecting a home agent to be used by the virtual access instance, at the generation time of the virtual access instance.

8. The access service network system according to claim 5, wherein
the access device and the home agent further include a unit that transmits an IP packet to be exchanged between the two, by degenerating tunnels to only an L2TP tunnel.

9. The access service network system according to claim 5, wherein
the access device and the home agent further include a unit that transmits an IP packet to be exchanged between the two, by degenerating tunnels to only a Mobile IP tunnel.

10. An access service network system that establishes a communication connection between a mobile terminal and a connection destination network by using an L2TP in an access service network that includes the mobile terminal, a plurality of access devices for tunneling layer 2 data from the mobile terminal in an IP packet, and a server device that terminates the tunneling and the layer 2 data and that is connected to the connection destination network of the mobile terminal, wherein
the access device includes a unit that sets an L2TP tunnel between an own access device and an access device at a move destination, and combines the L2TP tunnel with an L2TP tunnel that the own access device has terminated to the mobile terminal, when a mobile terminal accommodated in the own access device moves to the other access device, and the access device before the move extends the L2TP tunnel to the access device at the move destination.

11. The access service network system according to claim 10, wherein
when the mobile terminal moves from the own access device to other access device, the access device sets an L2TP tunnel between an initial access device that relays a first access of the mobile terminal to the server device and the access device at the move destination, and the access device extends the L2TP tunnel to the access device at the move destination of the mobile terminal, using the initial access device as a relay point.

12. An access device that generates an L2TP tunnel between a mobile terminal and a server device at an access destination in an access service network that includes the mobile terminal, a plurality of access devices for tunneling layer 2 data from the mobile terminal in an IP packet, a server device that terminates the tunneling and the layer 2 data and that is connected to the connection destination network of the mobile terminal, and a home agent for continuing a communication of the mobile terminal that crosses between the access devices during communication, wherein
the access device includes
a virtual-access-instance generating unit that generates for each mobile terminal a virtual access instance which generates an L2TP tunnel between the server device and the mobile terminal, when the mobile terminal accesses the server device, and
a virtual-access-instance moving unit that moves the virtual access instance to an access device at a move destination, when the mobile terminal moves by crossing over between the access devices, and
the virtual access instance includes a unit that executes a position registration, using a generated virtual access instance or a move-destination access device as a care-of address, in the home agent, when the virtual access instance is generated or moves to a position controlled by a different access device.

13. An access device that generates an L2TP tunnel between a mobile terminal and a server device at an access destination in an access service network that includes the mobile terminal, a plurality of access devices for tunneling layer 2 data from the mobile terminal in an IP packet, and a server device that terminates the tunneling and the layer 2 data and that is connected to the connection destination network of the mobile terminal, wherein
the access device includes a unit that sets an L2TP tunnel between an own access device and an access device at a move destination, and combines the L2TP tunnel with an L2TP tunnel that the own access device has terminated to the mobile terminal, when a mobile terminal accommodated in the own access device moves to the other access device.

14. An L2TP tunnel concentrator that is used in an access service network that accommodates a mobile terminal and comprises: a plurality of access devices that generate a virtual access instance in the inside and generate an L2TP tunnel with the server device when the mobile terminal accesses, and transmit layer 2 data from the mobile terminal; a server device that terminates the L2TP tunnel and the layer 2 data, and is connected to a connection destination network of the mobile terminal; and a home agent that continues communication of the mobile terminal that crosses between the access devices during communication, wherein
the L2TP tunnel concentrator includes a unit that concentrates a plurality of L2TP tunnels from the virtual access instance into one tunnel, and distributes the concentrated tunnels to the server device, between the access device and the server device.

15. A home agent that is used in an access service network that accommodates a mobile terminal and includes a plurality of access devices that tunnel layer 2 data from the mobile terminal in an IP packet; a server device that terminates the tunnel and the layer 2 data, and is connected to a connection destination network of the mobile terminal; and a home agent that continues communication of the mobile terminal that crosses between the access devices during communication, the home agent comprising:
an L2TP tunnel concentrator that concentrates a plurality of L2TP tunnels from the virtual access instance into one tunnel, and distributes the concentrated tunnel to the server device.

16. A method of providing an access service to a mobile terminal when the mobile terminal accesses a server device in an access service network that accommodates a mobile terminal and including a plurality of access devices that tunnel layer 2 data from the mobile terminal in an IP packet; a server device that terminates the tunnel and the layer 2 data, and is connected to a connection destination network of the mobile terminal; and a home agent that continues communication of the mobile terminal that crosses between the access devices during communication, the method comprising:
a step at which a virtual access instance which generates, for each mobile terminal, an L2TP tunnel between the server device and the mobile terminal is generated, within the access device that accommodates the mobile terminal, when the mobile terminal accesses the server device;
a step at which the virtual access instance performs a position registration, using the access device as a care-of address, in the home agent;
a step at which the home agent allocates a home address to the virtual access instance, when the home agent accepts the position registration;
a step at which an L2TP tunnel is generated between the access device and the server device;
a step at which the virtual access instance is moved to an access device at a move destination, when the mobile terminal moves by crossing over between the access devices;
a step at which the moved virtual access instance performs a position registration including the home address and an address of the access device at the move destination as a care-of address, in the home agent; and
a step at which the home agent transmits layer 2 data destined to the virtual access instance from the server device, to the care-of address of the virtual access instance, using a Mobile IP tunnel, based on the virtual-access-instance address information.

17. A method of providing an access service to a mobile terminal when the mobile terminal accesses a server device in an access service network that accommodates a mobile terminal and includes a plurality of access devices that tunnel layer 2 data from the mobile terminal in an IP packet; and a server device that terminates the tunnel and the layer 2 data, and is connected to a connection destination network of the mobile terminal, wherein
when the mobile terminal moves from an access device in which the mobile terminal is accommodated at present to a position controlled by other access device, an L2TP tunnel is set between the access device before the move and the access device at the move destination, and the L2TP tunnel is extended by combining the L2TP tunnel with an L2TP tunnel that the access device before the move has terminated to the mobile terminal.
